# EUROPÄISCHE PATENTSCHRIFT

(11) **EP 1 459 437 B1**
(45) Veröffentlichungstag und Bekanntmachung des Hinweises auf die Patenterteilung: **13.07.2016**
(21) Anmeldenummer: 02774402.8
(22) Anmeldetag: 24.09.2002
(51) Int. Cl.: H02P 29/02, H02H 7/08

(54) **VERFAHREN UND SCHALTUNGSANORDNUNG ZUM SCHUTZ EINES ELEKTROMOTORS VOR ÜBERLASTUNG**
METHOD AND CIRCUIT ARRANGEMENT FOR PROTECTING AN ELECTRIC MOTOR FROM AN OVERLOAD
PROCEDE ET ENSEMBLE CIRCUIT POUR PROTEGER UN MOTEUR ELECTRIQUE CONTRE UNE SURCHARGE

(30) Priorität: 18.12.2001 DE 10162181
(43) Veröffentlichungstag der Anmeldung: 22.09.2004
(73) Patentinhaber: ROBERT BOSCH GMBH, 70442 Stuttgart (DE)
(72) Erfinder: MOHR, Thomas, 77830 Büehlertal (DE); KNAB, Norbert, 77767 Appenweier (DE); EISELE, Albert, 77855 Achern (DE); RAPP, Juergen, 76337 Waldbronn (DE)
(86) Internationale Anmeldenummer: PCT/DE2002/003604
(87) Internationale Veröffentlichungsnummer: WO 2003/052921

(56) Entgegenhaltungen:
- EP-A- 0 461 066
- DE-A- 4 444 810
- DE-A- 19 944 194
- US-A- 5 687 066
- PATENT ABSTRACTS OF JAPAN vol. 017, no. 201 (M-1399), 20. April 1993 (1993-04-20) & JP 04 345576 A (TOYOTA AUTOM LOOM WORKS LTD), 1. Dezember 1992 (1992-12-01)

## Beschreibung

### Stand der Technik

Die Erfindung geht aus von einem Verfahren zum Schutz eines Elektromotors und/oder seiner Ansteuerschaltung vor Überlastung sowie von einer Schaltungsanordnung zur Durchführung eines derartigen Verfahrens nach dem Oberbegriff des Anspruchs 1. Hierzu ist aus der DE-199 44 194 A ein Überlastschutz für einen elektronisch kommutierbaren Motor bekannt, dessen Endstufe über eine elektronische Steuereinheit mittels PWM-Steuersignalen ansteuerbar und von einer Versorgungsspannung speisbar ist. Eine Begrenzung auf eine maximale Belastung mit Überlastungsschutz des Motors wird dabei erreicht, indem in Abhängigkeit von der Größe der Versorgungsspannung und des vorgegebenen Sollwertes für die PWM-Steuersignale zumindest ab der Überschreitung der Nennspannung des Motors die Pulsweite der PWM-Steuersignale für die Endstufe auf Werte reduziert wird, die eine Überlastung des Motors und der elektronischen Bauteile durch Begrenzung der Motorleistung verhindern. Eine derartige Schaltungsanordnung gewährt jedoch nur solange Überlastungsschutz, wie die Ansteuerung der Endstufe durch PWM-Signale selbst keine Störungen aufweist.

Der Erfindung liegt die Aufgabe zugrunde, ein Verfahren zum Schutz eines Elektromotors und/oder seiner Ansteuerung vor Überlastung sowie eine zur Durchführung eines derartigen Verfahrens geeignete Schaltungsanordnung anzugeben, mit denen auch bei Störungen in der Ansteuerschaltung selbst ein Schutz des Elekromotors und seiner Leistungsversorgung vor Überlastung gewährleistet ist. Dies wird erreicht durch ein Verfahren gemäß Anspruch 1 sowie durch eine Schaltungsanordnung gemäß Anspruch 8. Hierbei ist insbesondere sichergestellt, dass im sogenannten Notlauffall des Motors, das heißt, wenn seine reguläre Ansteuerschaltung ausgefallen oder außer Betrieb gesetzt worden ist, eine Kompensation einer überhöhten Batteriespannung und einer hierdurch verursachten Überlastung des Antriebs gewährleistet ist.

Ausgestaltungen und Weiterbildungen der Erfindungen ergeben sich aus den Unteransprüchen und der Beschreibung des Ausführungsbeispiels zum Schutz eines Gleichstrom- Lüftermotors eines Kraftfahrzeuges mit einer 12 V-Gleichstrom-Bordnetzversorgung. Das Verfahren dient der Sicherstellung des Notlaufbetriebes für einen Elektromotor, welcher bei einem Lüftermotor für Kraftfahrzeuge einerseits gewährleistet sein muss, andererseits jedoch nicht selbst zu Schäden führen darf. Das Augenmerk gilt dabei insbesondere der Unterbrechung der Ansteuerleitung der Kühlerlüfterendstufe, das heißt dem ordnungsgemäßen Empfang der Ansteuersignale der Endstufe, und der Überwachung der geschalteten Versorgungsspannung, im Kraftfahrzeug also der über den Zündstartschalter geführten Batteriespannung.

Ein vorteilhaftes Verfahren ist derart ausgestaltet, dass in der Ansteuerschaltung mindestens eine Überspannungsschwelle definiert ist, deren Erreichung oder Überschreitung zu einer Reduzierung der dem Motor zugeführten Leistung oder zur Abschaltung des Motors führt. Vorzugsweise sind das Verfahren und die Schaltungsanordnung so gestaltet, dass unterhalb einer ersten Überspannungsschwelle eine dem Bereich zwischen 30% und 100% der Batteriespannung entsprechende Leistung dem Motor zugeführt wird. Hierbei kann bis zum Erreichen der ersten Überspannungsschwelle eine der vollen Batteriespannung entsprechende Leistung an den Motor angelegt werden, wahlweise kann jedoch die Leistung auch bereits mit der Aktivierung der Notlaufsteuerung oder mit dem Erreichen der Batterienennspannung bereits zum Beispiel auf den halben Leistungswert reduziert werden. Die volle Batteriespannung entspricht bei der Pulsweitenmodulation einer Ansteuerung mit 100% Tastverhältnis, bei der halben Batteriespannung beträgt das Tastverhältnis 50%. Bevorzugterweise sind jedoch zwei Überspannungsschwellungen vorgegeben, wobei dem Elektromotor unterhalb der ersten Schwelle eine der vollen Batteriespannung entsprechende Leistung zugeführt wird, während im Bereich zwischen der ersten Schwelle und der zweiten Schwelle eine vorzugsweise auf 50% der Batteriespannung reduzierte Leistung in den Motor eingespeist wird. Beim Erreichen der zweiten Überspannungsschwelle erfolgt dann eine Abschaltung des Motors, um eine Überlastung des Motors selbst und/oder seiner Endstufe zu verhindern.

Eine Spannungsüberwachungsschaltung, welche Teil der erfindungsgemäßen Motoransteuerung mit geregeltem Notlaufbetrieb ist, besitzt eine Komparatoranordnung mit einer der Anzahl der Überspannungsschwellen entsprechenden Zahl von Komparatoren, denen einerseits den jeweils definierten Überspannungsschwellen entsprechende Referenzspannungen und als Auslösegröße ein der aktuellen Batteriespannung entsprechender Referenzwert zugeführt werden. Auf diese Art ist in besonders einfacher und sicherer Weise die Verhinderung einer Überlastung des Antriebes gewährleistet, weil der Steuerung die für die Überlastung maßgeblichen Größen selbst zugrunde gelegt sind.

Eine besonders geeignete Schaltungsanordnung zum Schutz eines Elektromotors und/oder seiner Ansteuerung vor Überlastung im Notlaufbetrieb, insbesondere zum Schutz eines Gleichstrom-Lüftermotors eines Kraftfahrzeuges, arbeitet mit einer Motorendstufe mit pulsweitenmodulierter Ansteuerung und zeichnet sich dadurch aus, dass dem Elektromotor zum Schutz gegen Überlastung im Notlaufbetrieb, in dem die zugeführte Leistung nicht mehr durch die um Normalbetrieb wirksame PWM-Ansteuerschaltung gewährleistet werden kann, zusätzlich ein der Motorendstufe vorgeschalteter Microcontroller mit zugeordneter Komparatoranordnung zur Überwachung der Versorgungsspannung vorgesehen ist. Diese Notlaufsteuerung wird insbesondere bei einer Unterbrechung oder fehlerhaften Einspeisung des Sollwertsignals der Pulsweitenmodulation und/oder der geschalteten Versorgungsspannung der Motorendstufe wirksam, indem der Motorendstufe nun eine Steuerspannung zugeführt wird entsprechend einer oder mehrerer Überspannungsschwellen, welche überwacht und dem Microcontroller angezeigt werden.

Weitere Einzelheiten und vorteilhafte Ausgestaltungen der Erfindung ergeben sich aus der Beschreibung des Ausführungsbeispieles.

Die Abbildungen zeigen in
Figur 1 den Verlauf des Tastverhältnisses TV der dem Elektromotor zugeführten Spannung in Abhängigkeit von der veränderlichen Batteriespannung U_{bat} und
Figur 2 eine Schaltungsanordnung eines erfindungsgemäßen Überlastungsschutzes für den Notlaufbetrieb eines Kühlerlüfters für ein Kraftfahrzeug.

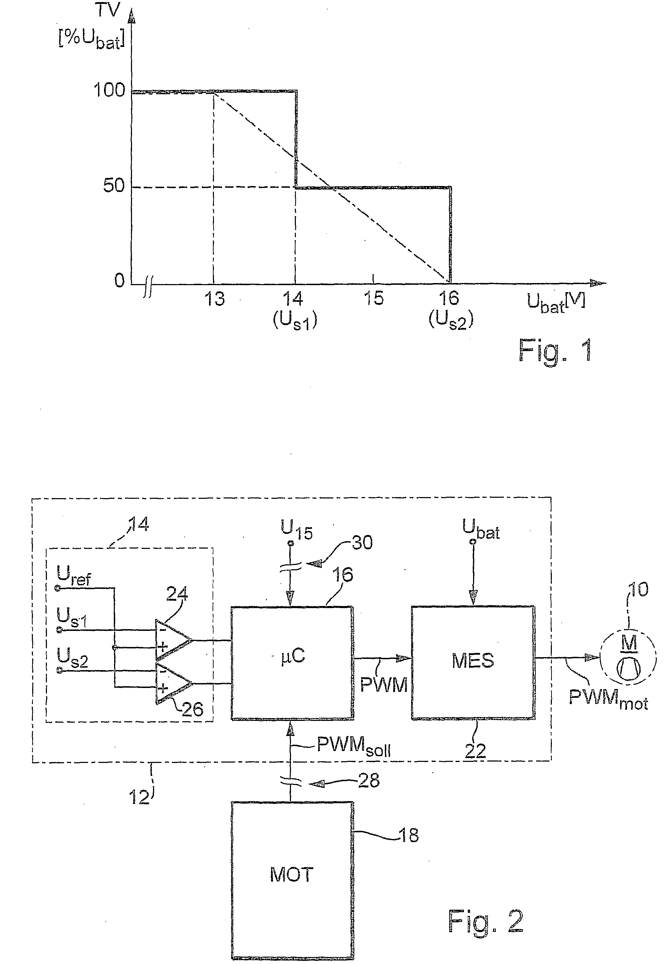

In Figur 1 ist das TastverhältnisTV der gepulsten Versorgungsspannung prozentual über der Batteriespannung U_{bat} dargestellt. Zur Vereinfachung der Darstellung sind beim Tastverhältnis TV nur die Werte für 50% und 100% gezeichnet. Für die Batteriespannung sind Werte von 13 V bis 16 V markiert. Hierbei entspricht eine Batteriespannung von 13 V der normalen Versorgungsspannung, eine erste Überspannungsschwelle Uₛ₁ ist bei 14 V definiert, eine zweite Überspannungsschwelle Uₛ₂ bei 16 V.

In der Zeichnung gemäß Figur 1 sind verschiedene Verläufe des Tastverhältnisses TV gezeichnet, welches dem Mittelwert der Speisespannung des Antriebes entspricht. Mit einer strichpunktierten Linie ist der übliche Verlauf der Pulsweitenmodulation dargestellt, wobei unterhalb der normalen Batteriespannung von 13 V die volle Spannung entsprechend einem Tastverhältnis von 100% angelegt wird. während über diesem Wert das Tastverhältnis - im gezeichneten Fall linear - reduziert wird und bei einer Batteriespannung von 16 V den Wert Null erreicht. Eine derartige Steuerung der Versorgungsspannung ist in der eingangs genannten DE 199 44 194 A beschrieben.

Im Notlaufbetrieb muss insbesondere der Fall berücksichtigt werden, wo die zuvor geschilderte, in.Figur 1 strichpunktiert dargestellte Regelung der Versorgungsspannung ausfällt. Da der Elektromotor im Normalfall für eine Versorgungsspannung von 13 V ausgelegt ist, würde eine anliegende Versorgungsspannung von 16 V beim Ausfall der Regelung den Motor und seine Endstufe in jedem Fall überlasten, was bei der vorliegenden erfindungsgemäßen Steuerung verhindert wird.

In Figur 1 ist mit einer durchgezogenen Linie ein Spannungsverlauf gezeichnet, bei dem nach dem Ausfall der PWM-Ansteuerung bis zu einem Wert von 14 V die volle Batteriespannung an den Motor angelegt wird. Diese geringe Überlastung wird im Normallfall beispielsweise von einem Kühlerlüftermotor für Kraftfahrzeuge und von dessen Endstufe noch ohne Schaden vertragen. Nach dem Erreichen der ersten Überspannungsschwelle Uₛ₁ von 14 V wird dann das Tastverhältnis auf 50% zurückgesetzt, sodass am Motor nur noch die halbe Batteriespannung anliegt. Dies ermöglicht noch eine ausreichende Notlaufleistung des Motors. Erst beim Erreichen der zweiten Überspannungsschwelle Uₛ₂ von 16 V wird die Versorgungsspannung dann abgeschaltet.

Eine weitere Alternative ist in Figur 1 mit einer gestrichelten Linie dargestellt. Diese zeigt die Möglichkeit, die Versorgungsspannung direkt beim Auftreten des Notlauffalles auf die Hälfte zurückzusetzen entsprechend einem Tastverhältnis von 50% und diesen Wert bis zum Abschalten bei der zweiten Überspannunsschwelle Uₛ₂ aufrecht zu erhalten. Die Anordnung weiterer Schwellen ist durchaus möglich. Denkbar wäre es zum Beispiel, eine erste Überspannungsschwelle bereits beim Nennwert der Batteriespannung von 13 V zu definieren und beim Erreichen dieses Wertes die Spannung zu reduzieren. Hierbei wäre es grundsätzlich auch möglich, im Notlaufbetrieb eine geregelte Absenkung des Tastverhältnisses TV vorzunehmen, beispielsweise entsprechend dem strichpunktierten Verlauf im ungestörten Betrieb.

Figur 2 zeigt eine Schaltungsanordnung zum Schutz eines Gleichstrom-Lüftermotors eines Kraftfahrzeuges und seiner Ansteuerschaltung 12 vor Überlastung. In der Zeichnung ist ein Elektromotor mit Lüfter dargestellt und mit 10 bezeichnet, welcher von der Ansteuerschaltung 12 mit einer pulsweitenmodulierten Spannung PWMₘₒₜ versorgt wird. Die Ansteuerschaltung 12 besteht im wesentlichen aus einer. Komparatoranordnung 12, einem Microcontroller 16 und einer Motorendstufe 22. Die Ansteuerung im Normalbetrieb des Elektromotors 12 erfolgt über ein im Kraftfahrzeug üblicherweise als Motronik bezeichnetes Steuergerät 18, welches den Microcontroller 16 mit dem Sollwert der PWM versorgt. Weiterhin ist der Microcontroller 16 mit dem Ausgang der Komparatoranordnung 14 und mit der geschalteten Batteriespannung U₁₅ hinter dem Zündschalter verbunden. Der Ausgang des Microcontrollers 16 mit dem pulsweitenmodulierten Steuersignal PWM ist an die Motorendstufe 22 angeschlossen, die außerdem mit der nicht dargestellten Fahrzeugbatterie verbunden ist und von dort die Batteriespannung U_{bat} erhält. Am Ausgang der Motorendstufe 22 ist die pulsweitenmodulierte Versorgungsspannung PWMₘₒₜ an den Elekromotor 10 gelegt.

Die Komparatoranordnung 14 besteht im Ausführungsbeispiel aus zwei Komparatoren 24 und 26, an deren nichtinvertierendem Eingang jeweils ein von der aktuellen Batteriespannung abgeleiteter Referenzwert U_{ref} anliegt. Dieser wird jeweils verglichen mit den anhand der Figur 1 bereits erläuterten Überspannungsschwellen Uₛ₁ beziehungsweise Uₛ₂, welche bei einem 12 V-Bordnetz eines Kraftfahrzeuges zweckmäßigerweise auf Werte von 14 V für Uₛ₁ und von 16 V für Uₛ₂ festgelegt werden als Grenzwerte für eine normale Batteriespannung von 13 V als Versorgungsspannung des Elektromotors 10.

Als Störfallgröße für den Notlaufbetrieb des Elektromotors 10 wird insbesondere das Ausgangssignal PWMₛₒₗₗ der Motronik 18 überwacht. So könnte bei einer Unterbrechung der Verbindung zwischen der Motronik 18 und dem Microcontroller 16 am Elektromotor 10 oder an der Endstufe 22 eine Überlastung auftreten, wenn gleichzeitig mit einer Störung der Pulsweitenmodulation des Ansteuersignals eine Überhöhung der Batteriespannung U_{bat} auftritt.

Ein anderer Grund für die Aktivierung der Notlaufsteuerung kann eine Unterbrechung der geschalteten Batteriespannung U₁₅ hinter dem Zündschalter des Kraftfahrzeuges sein, wobei diese Störung gleichzeitig oder getrennt mit einer Störung im Ansteuersignal der Motronik 18 auftreten kann.

Im Störfall liegt in der Komparatoranordnung 14 am invertierenden Eingang des Komparators 24 ein Signal entsprechend einer Überspannungsschwelle Uₛ₁ von 14 V, während am invertierenden Eingang des Komparators 26 ein Eingangssignal entsprechend der Überspannungsschwelle Uₛ₂ von 16 V anliegt. Beide nicht invertierenden Eingänge der Komparatoren 24 und 26 sind mit einer Referenzspannung U_{ref} beaufschlagt, deren Größe durch die aktuelle Batteriespannung U_{bat} bestimmt wird.

Bei einem Notlaufprogramm entsprechend der durchgezogenen Linie in Figur 1 wird die Komparatoranordnung 14 und mit ihr die Notlaufsteuerung nicht aktiv, solange die Batteriespannung einen Wert von 14 V entsprechend der Schwelle Uₛ₁ nicht übersteigt. Bis zu diesem Zeitpunkt beträgt das Tastverhältnis TV 100% und die Batteriespannung wird in voller Höhe über die Motorendstufe 22 an den Elektromotor 10 angelegt. Mit Erreichen der Überspannungsschwelle Uₛ₁ von 14 V wird das Tastverhältnis TV auf einen Wert von 50'% abgesenkt und die halbe Batteriespannung gelangt an den Motor, bis die Überspannungsschwelle Uₛ₂ von 16 V erreicht ist und die Stromversorgung des Elektromotors 10 abgeschaltet wird. Entsprechendes gilt für die anderen in Figur 1 angedeuteten Verläufe einer im Notlaufbetrieb abgesenkten Batteriespannung. Bei der gestrichelten Linie wird sofort bei dem Auftreten einer Störung an den Störstellen 28 und/oder 30 die Versorgungsspannung durch eine Absenkung des Tastverhältnisses auf 50% halbiert und bleibt in dieser Höhe am Elektromotor 10 anliegend, bis die Überspannungsschwelle Uₛ₂ von 16 V erreicht ist und der Motor abgeschaltet wird.

Entsprechend der strichpunktierten Linie in Figur 1 kann auch im Notlaufbetrieb eine geregelte Versorgung gewährleistet werden. Außerdem könnten zusätzliche Überspannungsschwellen definiert und Zwischenstufen bei der Absenkung der Versorgungsspannung realisiert werden. Dabei ist die Überwachungsfunktion in der Ansteuerschaltung 12 durch den Microcontroller 16 nicht auf den vollständigen Ausfall des PWMₛₒₗₗ-Signals oder der geschalteten Versorgungsspannung U₁₅ beschränkt, sondern es erfolgt im Microcontroller 16 insbesondere auch eine Überwachung der Größen PWMₛₒₗₗ und U₁₅ auf Plausibilität. Dabei können zum Beispiel für die Größen U₁₅ und PWMₛₒₗₗ Grenzwerte von 10% beziehungsweise 90% definiert werden, bei deren Unter- oder Überschreitung der Fehlerfall signalisiert wird.

Die Taktfrequenz der Pulsweitenmodulation einer derartigen Ansteuerschaltung 12 liegt üblicherweise im Bereich zwischen 100 Hz und 300 Hz und auch diese Taktfrequenz wird überwacht, wobei ebenfalls geringfügige Schwankungen nicht als Störfall ausgewiesen werden. Schließlich kann an die Stelle der Motronik 18 jede andere Regel- oder Steuereinheit für die Pulsweitenmodulation treten, insbesondere kann diese auch in den Microcontroller 16 integriert sein. Wesentlich ist, dass beim Ausfall der normalen Regelung oder Steuerung und beim gleichzeitigen Auftreten einer erhöhten Batteriespannung der Elektromotor 10 oder dessen Endstufe 22 nicht überlastet werden, sondern dass in diesem Fall die Notlaufsteuerung eingreift, welche den weiteren Betrieb des Elektromotors 10 in vorgegebenen Grenzen aufrechterhält.

Die erfindungsgemäße Schaltungsanordnung ermöglicht somit eine interne Spannungskompensation innerhalb der Motoransteuerung beim Ausfall der normalerweise vorgeschalteten Motorsteuerung, beispielsweise in Form der Motronik 18, welche bei einer Unterbrechung der Ansteuerleitung im Fall einer erhöhten Batteriespannung eine Überlastung nicht verhindern kann.

## Patentansprüche

1. Verfahren zum Schutz eines Elektromotors (10) und/oder seiner Ansteuerschaltung (12) vor Überlastung, insbesondere zum Schutz eines Gleichstrom-Lüftermotors eines Kraftfahrzeuges, wobei dem Elektromotor eine Motorendstufe zur pulsweitenmodulierten Steuerung (PWM) der zugeführten Leistung und eine Steuerung zur Begrenzung der Motorleistung beim Auftreten einer erhöhten Versorgungsspannung zugeordnet sind, **dadurch gekennzeichnet, dass** ein Überlastungsschutz im Notlaufbetrieb des Elektromotors (10) wirksam wird durch Aktivierung einer Notlauflaufsteuerung (14,16) beim Auftreten einer Störung (28, 30) in der Ansteuerung (8) der Motorendstufe, wobei dem Elektromotor (10) eine definierte Notlaufleistung zugeführt wird, welche unterhalb einer ersten Überspannungsschwelle (Uₛ₁) der Versorgungsspannung einen vorgegebenen Wert oder Verlauf aufweist und beim Überschreiten der ersten Überspannungsschwelle (Uₛ₁), einer oder mehrerer Überspannungsschwellen (Uₛ₁, Uₛ₂) reduziert oder abgeschaltet wird.

2. Verfahren nach Anspruch 1, **dadurch gekennzeichnet, dass** dem Elektromotor (10) unterhalb der ersten Überspannungsschwelle (Uₛ₁) eine dem Bereich zwischen 30% und 100% der Batteriespannung (U_{bat}), insbesondere eine der vollen Batteriespannung (U_{bat}) entsprechende Leistung zugeführt wird.

3. Verfahren nach Anspruch 1 oder 2, **dadurch gekennzeichnet, dass** zwei Überspannungsschwellen (Uₛ₁, Uₛ₂) vorgegeben sind, wobei dem Elektromotor (10) zwischen der ersten Schwelle (Uₛ₁) und der zweiten Schwelle (Uₛ₂) eine dem Bereich zwischen 30 und 70% der Batteriespannung (U_{bat}) f vorzugsweise eine der halben Batteriespannung entsprechende Leistung zugeführt wird.

4. Verfahren nach einem der vorhergehenden Ansprüche, **dadurch gekennzeichnet, dass** der Elektromotor (10) beim Erreichen der zweiten Überspannungsschwelle (Uₛ₂) abgeschaltet wird.

5. Verfahren nach einem der vorhergehenden Ansprüche zur Verwendung in einem 12 V-Bordnetz eines Kraftfahrzeuges, **dadurch gekennzeichnet, dass** die erste Überspannungsschwelle (Uₛ₁) auf einen Wert von 14 V festgelegt ist.

6. Verfahren nach einem der vorhergehenden Ansprüche zur Verwendung in einem 12 V-Bordnetz eines Kraftfahrzeuges, **dadurch gekennzeichnet, dass** die zweite Überspannungsschwelle (Uₛ₂) auf einen Wert von 16 V festgelegt wird.

7. Verfahren nach einem der vorhergehenden Ansprüche, **dadurch gekennzeichnet, dass** die Leistung des Elektromotors (10) im Notlaufbetrieb mittels einer Spannungsüberwachungsschaltung mit einer Komparatoranordnung (14) geregelt wird, der als Referenzwert zu den Überspannungsschwellen (Uₛ₁, Uₛ₂) eine der Batteriespannung (U_{bat}) entsprechende Referenzspannung (U_{ref}) zugeführt wird.

8. Schaltungsanordnung zum Schutz eines Elektromotors und/oder seiner Ansteuerschaltung (12) vor Überlastung, insbesondere zum Schutz eines Gleichstrom-Lüftermotors eines Kraftfahrzeuges, mit einer Motorendstufe zur pulsweitenmodulierten Steuerung (PWM) der dem Elektromotor zugeführten Leistung, und mit einer Steuerung zur Begrenzung der Motorleistung beim Auftreten einer erhöhten Versorgungsspannung, insbesondere zur Durchführung des Verfahrens nach einem der vorhergehenden Ansprüche, **dadurch gekennzeichnet, dass** zu einem Überlastungsschutz im Notlaufbetrieb des Elektromotors (10) dessen Ansteuersschaltung (12) als Notlaufsteuerung (14,16, 22) ausgebildet ist, welche zusätzlich zu einem PWM-Sollwertgeber (18) und der Motorendstufe (22) einen der Motorendstufe (22) vorgeschalteten Microcontroller (16) aufweist, der bei einer Unterbrechung oder einer fehlerhaften Einspeisung des Sollwertsignals der Pulsweitenmodulation (PWMₛₒₗₗ) und/oder der geschalteten Versorgungsspannung (U₁₅) der Motorendstufe (22) eine Steuerspannung (PWM) zuführt entsprechend einer Vorgabe mindestens einer Überspannungsschwelle (Uₛ₁, Uₛ₂) an den Microcontroller.

9. Schaltungsanordnung nach Anspruch 8, **dadurch gekennzeichnet, dass** die Notlaufsteuerung (14, 16, 22) eine Komparatoranordnung (14) aufweist, welcher einerseits eine der Batteriespannung (U_{bat}) entsprechende Referenzspannung (U_{ref}) und andererseits als Vergleichswert wenigstens eine Überspannungsschwelle (Uₛ₁, Uₛ₂) oberhalb der normalen Batteriespannung (U_{bat}) vorgegeben sind.

10. Schaltanordnung nach Anspruch 8 oder 9 zur Verwendung in einem 12 V-Bordnetz eines Kraftfahrzeuges, **dadurch gekennzeichnet, dass** die Komparatoranordnung (14) zwei Komparatoren (24, 26) aufweist, denen einerseits jeweils ein von der aktuellen Batteriespannung (U_{bat}) abgeleiteter Referenzwert (Uᵣₑₗ) und andererseits Überspannungsschwellen von ca. 14V (Uₛ₁), beziehungsweise von ca. 16V (Uₛ₂) oberhalb der normalen Batteriespannung (U_{bat}) von ca. 13V vorgegeben sind.

## Claims

1. Method for protecting an electric motor (10) and/or its drive circuit (12) against overloading, in particular for protecting a DC fan motor of a motor vehicle, wherein the electric motor is assigned a motor output stage for the pulse-width-modulated control (PWM) of the power fed in and a controller for limiting the motor power when an increased supply voltage occurs, **characterized in that** an overload protection becomes effective in emergency operation of the electric motor (10) as a result of the activation of an emergency operation controller (14, 16) when a disturbance (28, 30) occurs in the driving (8) of the motor output stage, wherein the electric motor (10) is fed a defined emergency operation power which has a predefined value or profile below a first overvoltage threshold (Uₛ₁) of the supply voltage and is reduced or switched off upon the excedence of the first overvoltage threshold (Uₛ₁) of one or a plurality of overvoltage thresholds (Uₛ₁, Uₛ₂).

2. Method according to Claim 1, **characterized in that,** below the first overvoltage threshold (Uₛ₁), a power corresponding to the range of between 30% and 100% of the battery voltage (U_{bat}), in particular a power corresponding to the full battery voltage (U_{bat}), is fed to the electric motor (10).

3. Method according to Claim 1 or 2, **characterized in that** two overvoltage thresholds (Uₛ₁, Uₛ₂) are predefined, wherein, between the first threshold (Uₛ₁) and the second threshold (Uₛ₂), a power corresponding to the range of between 30% and 70% of the battery voltage (U_{bat}), preferably a power corresponding to half the battery voltage, is fed to the electric motor (10).

4. Method according to any of the preceding claims, **characterized in that** the electric motor (10) is switched off when the second overvoltage threshold (Uₛ₂) is reached.

5. Method according to any of the preceding claims for use in a 12 V on-board electrical system of a motor vehicle, **characterized in that** the first overvoltage threshold (Uₛ₁) is fixed at a value of 14 V.

6. Method according to any of the preceding claims for use in a 12 V on-board electrical system of a motor vehicle, **characterized in that** the second overvoltage threshold (Uₛ₂) is fixed at a value of 16 V.

7. Method according to any of the preceding claims, **characterized in that** the power of the electric motor (10) is regulated in emergency operation by means of a voltage monitoring circuit comprising a comparator arrangement (14), to which a reference voltage (U_{ref}) corresponding to the battery voltage (U_{bat}) is fed as reference value with respect to the overvoltage thresholds (Uₛ₁, Uₛ₂).

8. Circuit arrangement for protecting an electric motor and/or its drive circuit (12) against overloading, in particular for protecting a DC fan motor of a motor vehicle, comprising a motor output stage for the pulse-width-modulated control (PWM) of the power fed to the electric motor, and comprising a controller for limiting the motor power when an increased supply voltage occurs, in particular for carrying out the method according to any of the preceding claims, **characterized in that** for overload protection in emergency operation of the electric motor (10), the drive circuit (12) thereof is designed as an emergency operation controller (14, 16, 22) comprising, in addition to a PWM setpoint value transmitter (18) and the motor output stage (22), a microcontroller (16) which is connected upstream of the motor output stage (22) and which, in the event of an interruption or faulty feed-in of the setpoint value signal of the pulse width modulation (PWMₛₑₜₚₒᵢₙₜ), and/or of the switched supply voltage (U₁₅), feeds to the motor output stage (22) a control voltage (PWM) in accordance with a predefinition of at least one overvoltage threshold (Uₛ₁, Uₛ₂) to the microcontroller.

9. Circuit arrangement according to Claim 8, **characterized in that** the emergency operation controller (14, 16, 22) comprises a comparator arrangement (14), for which, firstly, a reference voltage (U_{ref}) corresponding to the battery voltage (U_{bat}) and, secondly, as comparison value, at least one overvoltage threshold (Uₛ₁, Uₛ₂) above the normal battery voltage (U_{bat}) are predefined.

10. Circuit arrangement according to Claim 8 or 9 for use in a 12 V on-board electrical system of a motor vehicle, **characterized in that** the comparator arrangement (14) comprises two comparators (24, 26), for which, firstly, in each case a reference value (U_{ref}) derived from the present battery voltage (U_{bat}) and, secondly, overvoltage thresholds of approximately 14 V (Uₛ₁) and, respectively, of approximately 16 V (Uₛ₂) above the normal battery voltage (U_{bat}) of approximately 13 V are predefined.

## Revendications

1. Procédé de protection d'un moteur électrique (10) et/ou de son circuit d'excitation (12) contre les surcharges, notamment pour protéger un moteur de ventilateur à courant continu d'un véhicule automobile, un étage final de moteur servant à la commande par modulation d'impulsions en largeur (PWM) de la puissance acheminée et une commande servant à limiter la puissance du moteur lorsqu'il se produit une tension d'alimentation accrue étant associés au moteur électrique, **caractérisé en ce qu'**une protection contre les surcharges devient active en mode de fonctionnement de secours du moteur électrique (10) par activation d'une commande de fonctionnement de secours (14, 16) dans le cas où une perturbation (28, 30) se produit dans l'excitation (8) de l'étage final du moteur, une puissance de fonctionnement de secours définie étant acheminée au moteur électrique (10), laquelle possède une valeur ou une courbe prédéfinie au-dessous d'un premier seuil de surtension (U_{S1}) de la tension d'alimentation et laquelle est réduite ou mise hors circuit en cas de dépassement du premier seuil de surtension (U_{S1}) parmi un ou plusieurs seuils de surtension (U_{S1}, U_{S2}).

2. Procédé selon la revendication 1, **caractérisé en ce qu'**une puissance correspondant à la plage entre 30 % et 100 % de la tension de batterie (U_{bat}), notamment à la pleine tension de batterie (U_{bat}), est acheminée au moteur électrique (10) au-dessous du premier seuil de surtension (U_{S1}).

3. Procédé selon la revendication 1 ou 2, **caractérisé en ce que** deux seuils de surtension (U_{S1}, U_{S2}) sont prédéfinis, une puissance correspondant à la plage entre 30 % et 70 % de la tension de batterie (U_{bat}), de préférence à la moitié de la tension de batterie, étant acheminée au moteur électrique (10) entre le premier seuil (U_{S1}) et le deuxième seuil (U_{S2}).

4. Procédé selon l'une des revendications précédentes, **caractérisé en ce que** le moteur électrique (10) est mis hors circuit lorsque le deuxième seuil de surtension (U_{S2}) est atteint.

5. Procédé selon l'une des revendications précédentes destiné à être utilisé dans un réseau de bord de 12 V d'un véhicule automobile, **caractérisé en ce que** le premier seuil de surtension (U_{S1}) est défini à une valeur de 14 V.

6. Procédé selon l'une des revendications précédentes destiné à être utilisé dans un réseau de bord de 12 V d'un véhicule automobile, **caractérisé en ce que** le deuxième seuil de surtension (U_{S2}) est défini à une valeur de 16 V.

7. Procédé selon l'une des revendications précédentes, **caractérisé en ce que** la puissance du moteur électrique (10) en mode de fonctionnement de secours est régulée au moyen d'un circuit de surveillance de tension doté d'un arrangement comparateur (14), auquel est acheminée comme valeur de référence pour les seuils de surtension (U_{S1}, U_{S2}) une tension de référence (U_{ref}) correspondant à la tension de batterie (U_{bat}).

8. Arrangement de circuit destiné à protéger un moteur électrique et/ou son circuit d'excitation (12) contre les surcharges, notamment pour protéger un moteur de ventilateur à courant continu d'un véhicule automobile, comprenant un étage final de moteur servant à la commande par modulation d'impulsions en largeur (PWM) de la puissance acheminée au moteur électrique et comprenant une commande servant à limiter la puissance du moteur lorsqu'il se produit une tension d'alimentation accrue, notamment destiné à mettre en oeuvre le procédé selon l'une des revendications précédentes, **caractérisé en ce que** le circuit d'excitation (12) du moteur électrique (10) est réalisé sous la forme d'une commande de fonctionnement de secours (14, 16, 22) en vue d'une protection contre les surcharges en mode de fonctionnement de secours du moteur électrique (10), laquelle possède, en plus d'un générateur de valeur de consigne PWM (18) et de l'étage final du moteur (22), un microcontrôleur (16) branché en amont de l'étage final du moteur (22) et qui, dans le cas d'une interruption ou d'une injection erronée du signal de consigne de la modulation d'impulsions en largeur (PWMₛₒₗₗ) et/ou de la tension d'alimentation (U₁₅) commutée, achemine à l'étage final du moteur (22) une tension de commande (PWM) conformément à une indication d'au moins un seuil de surtension (U_{S1}, U_{S2}) au niveau du microcontrôleur.

9. Arrangement de circuit selon la revendication 8, **caractérisé en ce que** la commande de fonctionnement de secours (14, 16, 22) possède un arrangement comparateur (14) auprès duquel sont prédéfinis d'une part une tension de référence (U_{ref}) correspondant à la tension de batterie (U_{bat}) et d'autre part, en tant que valeur comparative, au moins un seuil de surtension (U_{S1}, U_{S2}) au-dessus de la tension de batterie (U_{bat}) normale.

10. Arrangement de circuit selon la revendication 8 ou 9 destiné à être utilisé dans un réseau de bord de 12 V d'un véhicule automobile, **caractérisé en ce que** l'arrangement comparateur (14) possède deux comparateurs (24, 26) auprès desquels sont prédéfinis d'une part à chaque fois une tension de référence (U_{ref}) dérivée de la tension de batterie (U_{bat}) actuelle et d'autre part des seuils de surtension d'environ 14 V (U_{S1}) ou d'environ 16 V (U_{S2}) au-dessus de la tension de batterie (U_{bat}) normale d'environ 13 V.
